# EUROPÄISCHE PATENTSCHRIFT

(11) **EP 1 582 966 B1**
(45) Veröffentlichungstag und Bekanntmachung des Hinweises auf die Patenterteilung: **05.03.2008**
(21) Anmeldenummer: 05101305.0
(22) Anmeldetag: 21.02.2005
(51) Int. Cl.: G05B 19/00, G06F 3/023, G01C 21/36

(54) **Verfahren zur Darstellung möglicher Eingaben**
Method for displaying possible inputs
Méthode pour visualiser des inputs possibles

(30) Priorität: 01.04.2004 DE 102004016007
(43) Veröffentlichungstag der Anmeldung: 05.10.2005
(73) Patentinhaber: ROBERT BOSCH GMBH, 70442 Stuttgart (DE)
(72) Erfinder: Kempen, Reinhold, 31139 Hildesheim (DE); Schuenemann, Oliver, 31139 Hildesheim (DE)

(56) Entgegenhaltungen:
- EP-A- 1 124 372
- EP-A- 1 473 621
- DE-A1- 3 712 360
- US-B1- 6 373 450
- PATENT ABSTRACTS OF JAPAN Bd. 018, Nr. 362 (P-1766), 7. Juli 1994 (1994-07-07) & JP 06 095627 A (SONY CORP), 8. April 1994 (1994-04-08)

## Beschreibung

### Stand der Technik

Die Erfindung geht aus von einem Verfahren zur Darstellung möglicher Eingaben nach der Gattung des Hauptanspruchs. Aus der DE 37 12 360 A1 ist bereits ein Verfahren und eine Vorrichtung zur Auswahl oder Eingabe eines Zieles bei einem Navigationssystem in einem Kraftfahrzeug bekannt. Die Eingabe eines Zielnamens erfolgt stellenweise, indem mit einer ersten Komponente eines manuellen Eingabeelementes die Buchstabenstellen des Zielnamens schrittweise angewählt werden. Mit einer zweiten Komponente wird pro Buchstabenstelle mit wählbarer variabler Geschwindigkeit das Alphabet durchlaufen, bis ein gewünschter Buchstabe erreicht wird. Durch Beachtung der Auftrittswahrscheinlichkeit von Einzelbuchstaben und Buchstabengruppen sowie der Zusammensetzung einer Zielliste kann die Zahl der pro Buchstabenstelle zu durchlaufenden Buchstaben verringert werden. Stehen nur wenige mögliche Eingaben zur Auswahl, so wird ein Benutzer verhältnismäßig langsam zwischen diesen möglichen Eingaben wechseln. Denn bei einem schnellem Wechsel wäre recht zügig entweder ein Anschlagspunkt oder, bei einem Rundlauf durch alle möglichen Eingaben, die ursprüngliche Auswahl wieder erreicht. Steht jedoch eine große Anzahl verschiedener, möglicher Eingaben zur Auswahl, so benötigt es bei einem langsamen Wechsel viel Zeit, um alle möglichen Eingaben zu durchlaufen. Die DE 37 12 360 A1 lehrt hierzu, dass ein Benutzer diese Geschwindigkeit durch eine entsprechende Betätigung selbst regeln kann. Zur Abkürzung des Auswahlvorgangs kann die Buchstabenauswahl dabei so gestaltet werden, dass bei einem Drücken auf ein Eingabeelement mit zunehmender Betätigungskraft und/oder mit wachsendem Betätigungsweg die Durchlaufgeschwindigkeit kontinuierlich oder in Stufen gesteigert wird. Der Benutzer regelt hierbei die Frequenz, mit der die verschiedenen Buchstaben zur Auswahl nacheinander angezeigt werden, durch diese Eingabe selbst.

### Vorteile der Erfindung

Das erfmdungsgemäße Verfahren zur Darstellung möglicher Eingaben hat demgegenüber den Vorteil, dass die Frequenz für einen Wechsel zwischen den Darstellungen möglicher Eingaben, also die Geschwindigkeit, mit der ein solcher Wechsel durchgeführt wird, von der Anzahl der möglichen Eingaben abhängt. Hierdurch wird ein Benutzer davon entlastet, die Geschwindigkeit für einen Wechsel selbst an die Anzahl möglicher Eingaben anzupassen. Stehen dem Benutzer viele Eingabemöglichkeiten zur Verfügung, erfolgt der Wechsel automatisch mit höherer Geschwindigkeit, als in dem Fall, indem dem Benutzer nur wenige Eingabemöglichkeiten zur Verfügung stehen. Dies ist insbesondere dann vorteilhaft, wenn der Benutzer bedingt durch die Art der Anzeige nicht überblicken kann, wie groß die Anzahl der Eingabemöglichkeiten tatsächlich ist. Für ihn wird jedoch automatisch die optimale Einstellungsgeschwindigkeit gewählt.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist, dass dem Fahrer nur solche Zeichen zur Eingabe angeboten werden, die im Zusammenhang mit bisherigen Eingaben des Benutzers auch tatsächlich sinnvoll eingegeben werden können. Hierdurch wird der Benutzer davon entlastet, auch nicht sinnvolle bzw. nicht mögliche Eingaben zu betrachten. Dies ist insbesondere dann vorteilhaft, wenn sich die eingegebenen Zeichen zu Wörtern zusammensetzen, da hierbei durch die Ausblendung von Zeichen, die nicht sinnvoll eingegeben werden können, die Eingabe stark vereinfachen kann.

Ferner ist es vorteilhaft, dass ein automatischer Wechsel durch einen Benutzer ausgelöst und/oder beendet werden kann, so dass für den Wechsel zwischen den einzelnen Darstellungen kein weiterer Benutzereingriff nötig ist, bis das gewünschte Zeichen dargestellt wird.

Ferner ist es vorteilhaft, dass ein Benutzer von einer Auswahl mit höherer Geschwindigkeit auf eine Feinauswahl mit niedriger Geschwindigkeit umschalten kann, wenn er sich der von ihm gewünschten Auswahl genähert hat.

Es ist ferner vorteilhaft, eine akustische Rückmeldung vorzunehmen, so dass ein Benutzer für die Durchführung der Auswahl nicht notwendiger Weise die Anzeige betrachten muss.

Insbesondere ist die Verwendung des erfindungsgemäßen Verfahrens für eine Navigationsvorrichtung in einem Kraftfahrzeug vorteilhaft, da sie die Eingabe eines Fahrziels erleichtert und damit den Fahrer bei der Eingabe so entlasten kann, dass sich der Fahrer auf die Fahrzeugbedienung konzentrieren kann.

### Zeichnung

Ausführungsbeispiele der Erfindung sind in der Zeichnung dargestellt und in der nachfolgenden Beschreibung näher erläutert. Es zeigen
Figur 1 eine Navigationsvorrichtung zur Durchführung des erfindungsgemäßen Verfahrens,
Figuren 2 und 3 Ausführungsbeispiele für unterschiedliche Anzeigendarstellungen bei der Durchführung des erfindungsgemäßen Verfahrens.

### Beschreibung des Ausführungsbeispiels

Das erfindungsgemäße Verfahren kann für beliebige Eingaben verwendet werden. Es ist insbesondere dann vorteilhaft, wenn ein Benutzer durch andere Aufgaben, z.B. die Steuerung einer Maschine oder eines Fahrzeugs, abgelenkt sein könnte. Ferner ist die Verwendung des erfindungsgemäßen Verfahrens vorteilhaft, wenn lediglich eine begrenzte Anzeigefläche zur Verfügung steht, die nur einen Teil aller Auswahlmöglichkeiten oder z.B. nur eine einzige andere Auswahlmöglichkeit anzeigen kann. Insbesondere in Fahrzeugen ist eine begrenzte Anzeigefläche häufig anzutreffen, z.B. bei der Darstellung von Daten von Navigationssystemen. Im Folgenden wird daher das erfindungsgemäße Verfahren am Beispiel einer Navigationsvorrichtung in einem Kraftfahrzeug erläutert.

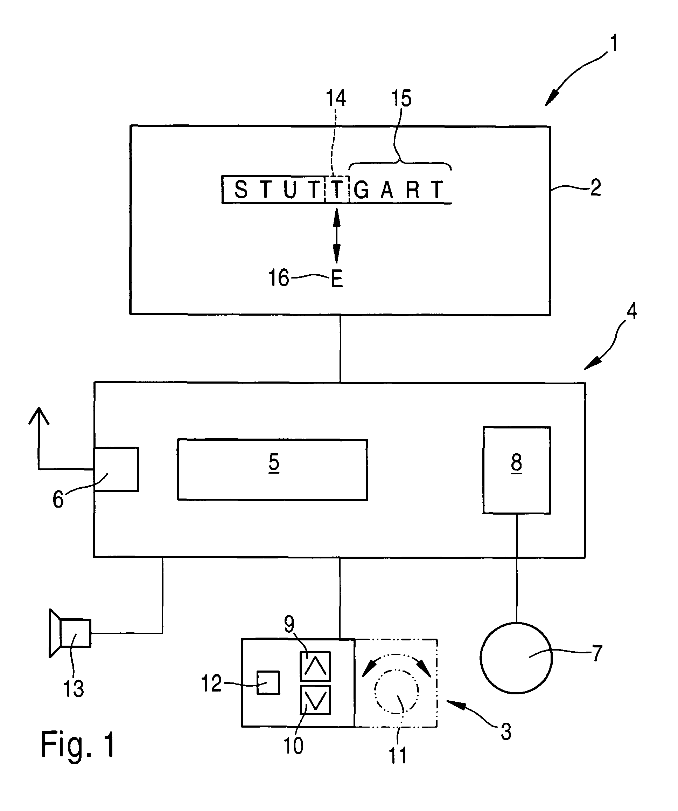

In der Figur 1 ist eine Navigationsvorrichtung 1 dargestellt, die zur Zielführung eines Fahrzeugs in einem Straßennetz dient. In einer Anzeige 2 werden einem Fahrer hierzu Fahrhinweise und/oder Kartendaten angezeigt. Über die Anzeige 2 wird in Zusammenwirken mit einer Bedieneinheit 3 ein Fahrziel in die Navigationsvorrichtung 1 eingegeben. Die Anzeige 2 und die Bedieneinheit 3 sind an eine Zentraleinheit 4 mit einer Recheneinheit 5 angeschlossen, die einer Fahrtroutenberechnung dient. Über eine Ortungseinheit 6, insbesondere eine Satellitenortungseinheit, bestimmt die Zentraleinheit 4 eine aktuelle Position des Fahrzeugs. Die Recheneinheit 5 bestimmt aus der aktuellen Position des Fahrzeugs eine Startposition und aus dem über die Bedieneinheit 3 eingegebenen Fahrziel unter Zugriff auf Verkehrswegedaten eine Fahrtroute zum Fahrziel und bestimmt hieraus die Fahrhinweise, die dem Fahrer über die Anzeige 2 ausgegeben werden. Eine entsprechende Bereitstellung von Verkehrswegedaten und/oder die Routenberechnung können im Fahrzeug durchgeführt werden. Über eine in der Figur 1 nicht gezeigte Funkschnittstelle können diese Aufgaben jedoch auch an eine nicht gezeigte, fahrzeugexterne Recheneinheit delegiert werden.

Um die Navigationsvorrichtung 1 in einem möglichst großräumigen räumlichen Gebiet einsetzen zu können, müssen der Navigationsvorrichtung 1 eine Vielzahl von Fahrzielen bekannt sein. Da für die Fahrtroutenberechnung jedoch eine Position des Fahrziels vorliegen muss, können nur solche Fahrziele eingegeben werden, zu denen auch Positionsdaten vorliegen. Solche Fahrziele sind bevorzugt in einer Speichereinheit 7 abgelegt. Sie können zur Verarbeitung von dort in einen Arbeitsspeicher 8 der Zentraleinheit 4 übertragen werden. In einer weiteren Ausführungsform können die Ortsnamen auch unmittelbar in dem Arbeitsspeicher 8 abgelegt oder zuvor über eine entsprechende Eingabe mittels der Bedieneinheit 3 entsprechend ausgewählt und an den Arbeitsspeicher 8 übertragen worden sein.

Eine erfindungsgemäße Eingabe erfolgt nun in der Weise, dass von einem Benutzer zunächst ein erster Buchstabe ausgesucht wird. Als erster Buchstabe wird z.B. ein A angezeigt. Will ein Benutzer nun als Fahrziel "Stuttgart" eingeben, so verfügt die Bedieneinheit 3 in einer ersten Ausführungsform über zwei Bedientasten 9, 10 mit denen das Alphabet durchlaufen werden kann. Mit der Bedientaste 10 wird das Alphabet in fortlaufender Richtung, also A, B, C, D,... und mit der Taste 9 in umgekehrter Richtung, also D, C, B, A... durchlaufen. In einer weiteren, alternativen Ausführungsform kann auch ein Drehregler vorgesehen sein, bei dem das Alphabet in beide Richtungen entsprechend einer Drehung des Drehreglers 11 durchlaufen wird. Ist ein gewünschter Buchstabe erreicht, also bei Stuttgart das S, so wird die Auswahl durch das Drücken einer Bestätigungstaste 12 bestätigt und es wird zu einer Eingabe eines nächsten Buchstabens weitergeschaltet. Bei der Ausführung mit dem Drehregler 11 kann die Bestätigung durch ein Drücken des Drehreglers 11 erfolgen. Damit ein Benutzer nicht die Anzeige bei der Eingabe des Fahrziels stets im Blick haben muss, kann der gerade zur Auswahl anliegende Buchstabe über einen Lautsprecher 13 angesagt werden.

Bei dem ersten Buchstaben stehen verhältnismäßig viele Auswahlmöglichkeiten zur Verfügung. Bis auf das Y können bei deutschen Ortsnamen alle Buchstaben Anfang eines Ortsnamens sein. Für die Auswahl des ersten Buchstabens erfolgt dabei bei einem Drücken auf eine der Tasten 9, 10 oder bei einem Verschwenken des Drehreglers aus einer Ruhelage ein automatischer Suchlauf in die gewünschte Richtung durch das Alphabet. In einer ersten Ausführungsform kann der Suchlauf solange durchgeführt werden, wie die jeweilige Taste gedrückt bzw. so lange der Drehregler verschwenkt ist. Werden die Taste oder der Drehregler losgelassen, so wird der Suchlauf beendet. In einer weiteren Ausführungsform kann der Suchlauf auch solange erfolgen, bis erneut eine der Tasten 9, 10 betätigt worden ist, der Drehregler 11 verschwenkt wird oder die Bestätigungstaste 12 gedrückt wird. Bei der Eingabe des ersten Buchstabens erfolgt dabei ein Wechsel mit einer Frequenz von 3 Hz, also jede drittel Sekunde wird ein nachfolgender Buchstabe angezeigt. Wird beispielsweise die Taste C ausgehend von dem A gedrückt, so wird nach einer drittel Sekunde das B, nach einer weiteren drittel Sekunde das C usw. angezeigt, bis das S erreicht wird. Hier lässt der Benutzer die Taste 10 los, so dass das S stehen bleibt. Korrigiert er nun nochmals, z.B. wenn er irrtümlich bis zum T durchgelaufen ist, so erfolgt in einer besonderen Ausführungsform ein Wechsel in einem langsameren Zeitabstand, z.B. in einem Zeitabstand von einer Sekunde. Die endgültige Auswahl bestätigt der Benutzer durch ein Drücken der Bestätigungstaste 12 bzw. in der alternativen Ausführungsform durch ein Drücken des Drehreglers 11.

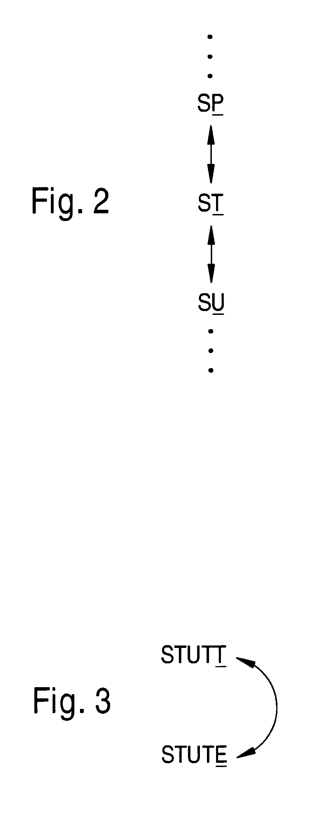

Die Eingabe des ersten Buchstabens S reicht jedoch noch nicht aus, um einen Ortsnamen eindeutig einzugeben. Vielmehr muss die Eingabe mit der Eingabe eines zweiten Buchstabens fortgeführt werden. Jedoch gibt es nicht für jeden Buchstaben des Alphabets die Möglichkeit, dass sich die Eingabe eines zweiten Buchstabens zu einem gültigen Ortsnamen zusammensetzen lässt, beispielsweise nicht für "SR" oder "SX". In der Figur 2 ist als ein Ausführungsbeispiel ein Wechsel zwischen verschiedenen Auswahlmöglichkeiten für die Buchstaben "P", "T" und "U" dargestellt. Während bei der Eingabe SP der Ortsname zu "Speyer", bei ST zu "Stuttgart" und bei SU "zu "Sulzburg" ergänzt werden kann, ist bei SQ und SS keine Eingabe möglich. Daher werden diese Buchstabenkombinationen bei einem Wechsel übersprungen. Da jedoch noch viele andere Buchstaben wie SO für "Solingen", z.B. SC für "Schafliausen" möglich sind, erfolgt ein Wechsel zwischen den Buchstaben ebenfalls mit einer größeren Frequenz. Die Frequenz kann aufgrund der geringeren Auswahl gegenüber der Vollauswahl von 3Hz auf 2 Hz verringert werden.

In der Figur 3 ist eine Ausführung für den Fall dargestellt, dass bereits weitere Buchstaben "STUT" insgesamt eingegeben worden sind. Nun ist nur noch die Auswahl zwischen "T" und "E", ergänzt zu "Stuttgart" bzw. "Stutensee" möglich. Da nur noch zwei Möglichkeiten der Eingabe bestehen, wird die Wechselfrequenz zwischen diesen beiden möglichen Eingaben T und E auf 1 Hz abgesenkt. D.h., wird eine der Tasten 9, 10 betätigt, wechselt die Anzeige zwischen T und E nur noch jede Sekunde. Ein Überspringen, also ein schnelles Wechseln zwischen den beiden möglichen Eingaben wird damit vermieden. In der Figur 1 ist in der Anzeige 2 beispielhaft eine Anzeigemöglichkeit für die in der Figur 3 gezeigte Eingabe dargestellt. Während die Buchstaben "STUT" bereits eingegeben worden sind, ist die Position, an der die nächste Eingabe erfolgen soll, durch einen Auswahlrahmen 14 hervorgehoben. In einer bevorzugten Ausführungsform sind auch übrige Buchstaben 15, die zu einer möglichen Eingabe noch ergänzt werden könnten, dargestellt. Durch eine mehrsekündige Betätigung der Bestätigungstaste 12 kann unmittelbar der somit ausgewählte, komplett dargestellte Ortsname ausgewählt werden. Ferner ist in einer bevorzugten Ausführungsform auch eine andere mögliche Eingabe 16, hier der Buchstabe "E", in der Anzeige 2 dargestellt. Hierdurch kann ein Benutzer erkennen, auf welchen möglichen Buchstaben er durch eine Eingabe wechseln kann bzw. welcher mögliche Buchstabe bei einem automatischen Wechseln als nächster angezeigt wird.

In einer weiteren Ausführungsform ist es auch möglich, dass ein automatischer Wechsel zwischen möglichen Eingaben bereits dann einsetzt, wenn eine vorherige Eingabe eines Zeichens abgeschlossen wurde. Wird z.B. das "S" eingegeben, so wechselt der zweite Buchstabe zwischen den möglichen Eingaben wie z.B. "P", "T" und "U" und weiteren Buchstaben automatisch. Durch eine Betätigung der Bedientasten 9, 10 kann dieser automatische Wechsel gestoppt und die Eingabe schließlich bestätigt werden. In einer weiteren, nicht gezeigten Ausführungsform kann die Eingabe z.B. auch durch eine Sprachsteuerung gesteuert werden.

Ist ein Ortsname vollständig eingegeben, so wird die Berechnung der Fahrtroute zu dem eingegebenen Fahrziel gestartet.

In dem oben beschriebenen Ausführungsbeispiel wird der Ausdruck "Ortsname" zunächst als eine Bezeichnung für eine Stadt oder eine Gemeinde verstanden. In einer bevorzugten Ausführungsform kann jedoch als ein Ortsname auch ein Straßenname oder eine Bezeichnung einer besonderen Einrichtung ausgewählt werden, z.B. eine Sehenswürdigkeit, eine öffentliche Einrichtung oder ein wichtiger landschaftlicher Punkt. Für andere Verwendungen als Navigationssysteme können die Ortsnamen durch die in dieser Verwendung erforderlichen Begriffe ausgetauscht werden, z.B. Radiosender. Für diese Begriffe ist dann eine der Ortsnamensliste entsprechende Liste zulässiger Eingaben erforderlich.

Die beispielhaft angegebenen Frequenzen sind variierbar und können je nach Anzahl möglicher Eingaben bevorzugt zwischen 1 Hz und 5 Hz variiert werden. Dabei ist eine stufenweise Zuordnung möglich, aber es kann auch eine lineare Abhängigkeit zwischen der Anzahl möglicher Eingaben und der Wechselfrequenz vorliegen. Die Frequenz ist ferner bevorzugt durch einen Benutzer einstellbar, so dass er eine an seine Auffassungsgabe angepasste Geschwindigkeit auswählen kann.

## Patentansprüche

1. Verfahren zur Darstellung möglicher Eingaben in einer Anzeige, wobei nacheinander mehrere mögliche Eingaben angezeigt werden, wobei ein Wechsel zwischen Darstellungen möglicher Eingaben automatisch gesteuert wird, **dadurch gekennzeichnet, dass** eine Frequenz für einen Wechsel zwischen den Darstellungen möglicher Eingaben von der Gesamtzahl der zu diesem Zeitpunkt möglichen Eingaben derart abhängt, dass die Frequenz bei einer geringeren Anzahl möglicher Eingaben niedriger ist, als bei einer größeren Anzahl möglicher Eingaben.

2. Verfahren nach Anspruch 1, **dadurch gekennzeichnet, dass** nacheinander einzelne Zeichen eingegeben werden und dass als mögliche Eingabe nur ein Zeichen angeboten wird, das in Kombination mit den zuvor eingegebenen Zeichen zulässig ist.

3. Verfahren nach Anspruch 2, **dadurch gekennzeichnet, dass** die einzelnen Zeichen Buchstaben sind und dass die Buchstaben mit der nacheinander durchgeführten Eingabe einzelner Buchstaben zu Wörtern zusammengesetzt werden.

4. Verfahren nach Anspruch 3, **dadurch gekennzeichnet, dass** die Wörter Ortsnamen sind, dass die zuvor eingegebenen Zeichen mit Orten in einer Ortsnamenmenge verglichen werden und dass als mögliche Eingaben nur solche Buchstaben zur Auswahl angeboten werden, die sich zusammen mit den zuvor eingegebenen Zeichen zu einem Ortsnamen in der Ortsnamenmenge ergänzen lassen.

5. Verfahren nach einem der vorherigen Ansprüche, **dadurch gekennzeichnet, dass** der Wechsel zwischen den Darstellungen möglicher Eingaben über eine Benutzersteuerung ausgelöst und/oder beendet wird.

6. Verfahren nach einem der vorherigen Ansprüche, **dadurch gekennzeichnet, dass** durch einen Benutzereingriff auf eine Feinauswahl mit einer konstanten Frequenz für einen Wechsel zwischen Darstellungen möglicher Eingaben umgeschaltet wird.

7. Verfahren nach einem der vorherigen Ansprüche, **dadurch gekennzeichnet, dass** eine akustische Rückmeldung über das dargestellte Zeichen erfolgt.

8. Verwendung eines Verfahrens nach einem der vorherigen Ansprüche zur Eingabe eines Fahrziels in eine Navigationsvorrichtung in einem Kraftfahrzeug.

## Claims

1. Method for presenting possible inputs in a display, where a plurality of possible inputs are displayed in succession, with a change between presentations of possible inputs being controlled automatically, **characterized in that** a frequency for a change between the presentations of possible inputs is dependent on the total number of inputs possible at this time such that the frequency for a relatively small number of possible inputs is lower than for a relatively large number of possible inputs.

2. Method according to Claim 1, **characterized in that** individual characters are input in succession and **in that** a possible input offered is just one character which is admissible in combination with the previously input characters.

3. Method according to Claim 2, **characterized in that** the individual characters are letters and **in that** the letters are assembled with the successively performed input of individual letters to form words.

4. Method according to Claim 3, **characterized in that** the words are place names, **in that** the previously input characters are compared with places in a set of place names and **in that** possible inputs offered for selection are just those letters which can be complemented together with previously input characters to form a place name in the set of place names.

5. Method according to one of the preceding claims, **characterized in that** the change between the presentations of possible inputs is initiated and/or terminated by means of user control.

6. Method according to one of the preceding claims, **characterized in that** user intervention changes over to fine selection at a constant frequency for a change between presentations of possible inputs.

7. Method according to one of the preceding claims, **characterized in that** an audible acknowledgement about the presented character is given.

8. Use of a method according to one of the preceding claims for inputting a travel destination into a navigation apparatus in a motor vehicle.

## Revendications

1. Procédé de représentation d'entrées possibles dans un afficheur selon lequel on affiche successivement plusieurs entrées possibles, on commande automatiquement un changement entre les représentations des entrées possibles,
**caractérisé en ce que**
la fréquence de changement entre les représentations des entrées possibles dépend du nombre total d'entrées possibles à cet instant, de sorte que la fréquence est plus faible pour un faible nombre d'entrées possibles que pour un plus grand nombre d'entrées possibles.

2. Procédé selon la revendication 1,
**caractérisé en ce qu'**
on introduit successivement les différents signes et **en ce que** comme entrées possibles, on ne présente qu'un signe qui est autorisé en combinaison avec les signes entrés précédemment.

3. Procédé selon la revendication 2,
**caractérisé en ce que**
les différents signes sont des lettres et les lettres de l'entrée successive des différentes lettres sont combinées en mots.

4. Procédé selon la revendication 3,
**caractérisé en ce que**
les mots sont des noms de lieux et les signes entrés précédemment sont comparés à des lieux faisant partie d'un ensemble de noms de lieux et **en ce que** comme entrées possibles, sont présentés à la sélection, seulement les lettres qui, en combinaison avec les signes introduits précédemment, peuvent se compléter pour former des noms de lieux appartenant à l'ensemble des noms de lieux.

5. Procédé selon l'une des revendications précédentes,
**caractérisé en ce que**
le changement entre les représentations des entrées possibles est déclenché et/ ou est terminé par la commande effectuée par l'utilisateur.

6. Procédé selon l'une des revendications précédentes,
**caractérisé en ce que**
par une intervention de l'utilisateur sur une sélection fine, on commute avec une fréquence constante l'alternance entre les représentations des entrées possibles.

7. Procédé selon l'une des revendications précédentes,
**caractérisé en ce qu'**
un message de retour acoustique est fourni pour le signe représenté.

8. Utilisation d'un procédé selon l'une des revendications précédentes pour entrer une destination dans un système de navigation équipant un véhicule automobile.
